Europäisches Patentamt

European Patent Office

Office européen des brevets

(11) Publication number: **0 356 063 B1**

## EUROPEAN PATENT SPECIFICATION

(45) Date of publication of patent specification: **19.10.94**

(51) Int. Cl.5: **B23P 13/00**, //F02M63/00, B23H9/00

(21) Application number: **89308040.8**

(22) Date of filing: **08.08.89**

(54) Method of producing a multi-apertured workpiece.

(30) Priority: **13.08.88 GB 8819321**

(43) Date of publication of application:
**28.02.90 Bulletin 90/09**

(45) Publication of the grant of the patent:
**19.10.94 Bulletin 94/42**

(84) Designated Contracting States:
**AT BE CH DE ES FR GB GR IT LI LU NL SE**

(56) References cited:
**EP-A- 0 218 340**
**US-A- 3 753 879**

(73) Proprietor: **AMCHEM COMPANY LIMITED
Manor Drive
Sileby Leicestershire LE12 7RZ (GB)**

(72) Inventor: **Baker, George Edward
Gilta View
The Green
Leire, Leicestershire LE17 5HL (GB)**

(74) Representative: **Cooper, Derek Robert et al
E.N. Lewis & Taylor
144 New Walk
Leicester LE1 7JA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a method of producing a multi-apertured workpiece such as a multi-apertured fuel injector and also to a production apparatus.

Fuel injectors for which the present invention is particularly applicable are used in compression ignition or "diesel" engines in which fuel is injected directly into a combustion chamber and is caused to atomise by the design of the injector. Such injectors often have a number of apertures and where more than one injector is used, such as in multi cylinder engines, it is desirable that all injectors should perform in as similar a manner as possible.

It is known from EP-A-0 218 340 to carry out an electro-discharge machining operation using an apparatus in which, after the machining of a plurality of apertures, a testing procedure is carried out using air pressure measurements to compare the workpiece with a pre-determined gauge. The EDM parameters by which the machining has been carried out are then adjusted if the workpiece does not conform to the pre-determined gauge within acceptable tolerances. Machining of the next workpiece should provide a part which theoretically tends to conform more closely to the pre-determined gauge.

However this procedure has the disadvantage that it is a quality control procedure in which the first mentioned workpiece must be discarded because it does not conform to acceptable standards. Since the original workpieces may differ from each other and the machining wire may need to be changed from time to time, substantial numbers of scrap products may be generated.

It is an object of the present invention to provide a method of producing a multi apertured workpiece which conforms closely to design parameters and which overcomes or reduces the problems of the prior art.

According to a first aspect of the invention there is provided a method of producing an apertured workpiece comprising forming an aperture in a workpiece, supplying a calibrating fluid through the aperture, measuring the flow and pressure of the calibrating fluid through the aperture and comparing the results with a predetermined ideal, adjusting the aperture forming device in accordance with such comparison so as to compensate for the difference between the measured values and the predetermined ideal, characterised in that the workpiece is a multi apertured workpiece and the method includes making said pressure and flow measurements after forming a first aperture and before forming a further aperture using the adjusted aperture forming device, and in that the preceding steps are repeated until the appropriate number of apertures has been formed.

It is preferred that the pressure and flow measurements are made as the position of the blank is adjusted in between aperture forming steps.

Conveniently, the apertures are formed by an EDM machine, the pressure and flow measurements being used to adjust the EDM generator parameters between aperture forming steps.

In a particularly preferred embodiment, the pressure and flow measurements are fed directly to a computer which in turn is connected directly to an EDM control device.

When an EDM device is used, the measuring fluid is conveniently deionised water.

It is also an object of a further aspect of the present invention to provide an apparatus for producing a multi-apertured workpiece conforming closely to design parameters.

According to this further aspect, the invention for apparatus for producing an apertured workpiece comprising aperture forming means; supply means for supplying a calibrating fluid through the aperture formed by the aperture forming means; flow and pressure measuring means for the calibrating fluid passing through the aperture; comparator means for comparing the flow and pressure measurements with a pre-determined ideal, and control means for the aperture forming means responsive to the output of said comparator to compensate for the difference between the measured values and the pre-determined ideal; a workpiece holder is provided at an aperture forming station and the workpiece is retained therein throughout the forming of a first aperture; in that the supply means supply the calibrating fluid through the aperture at said aperture forming station; in that the flow and pressure measuring means for the calibrating fluid are disposed at the aperture forming station; and in that the workpiece holder is retained at the aperture forming station for the formation of a further aperture.

The aperture forming device may be an EDM apparatus.

Computer control means may be provided for the EDM apparatus and may include said comparator means and said adjustment means.

Apparatus embodying the invention will now be described in more detail by way of example only with reference to the accompanying schematic drawings in which

Figure 1 is a block diagram of an apparatus for producing a multi-apertured workpiece, and

Figure 2 is a block diagram of a calibration device embodied in the apparatus.

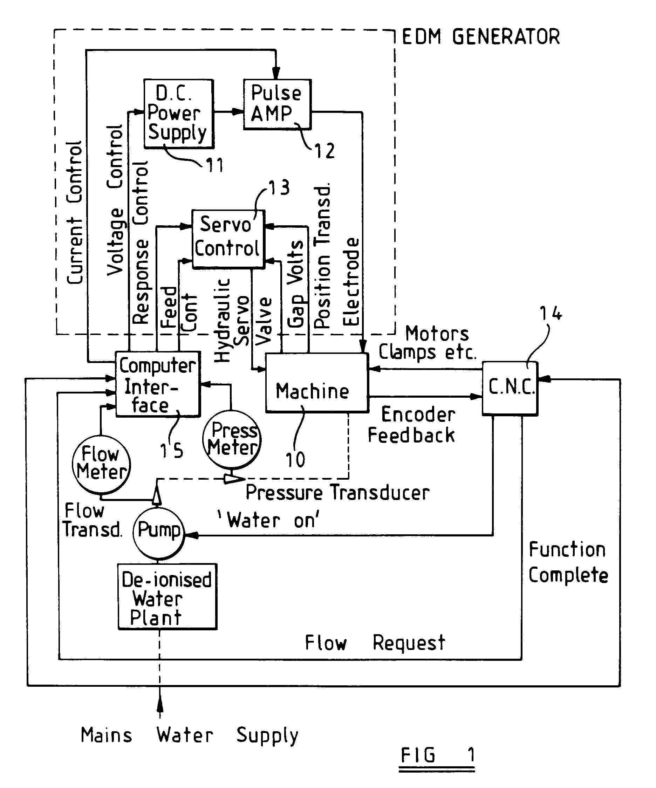

Referring to Figure 1 of the drawings, an EDM machine 10 is supplied with power from a DC supply 11 through a pulse amp 12. Servo controls 13 are used to control the operation of EDM machining in generally known manner.

A computer numerical control (CNC) device 14 controls the machining operation. A computer interface 15 associated with the CNC device is used in a manner to be described to control calibration of apertures machined by the EDM machine 10.

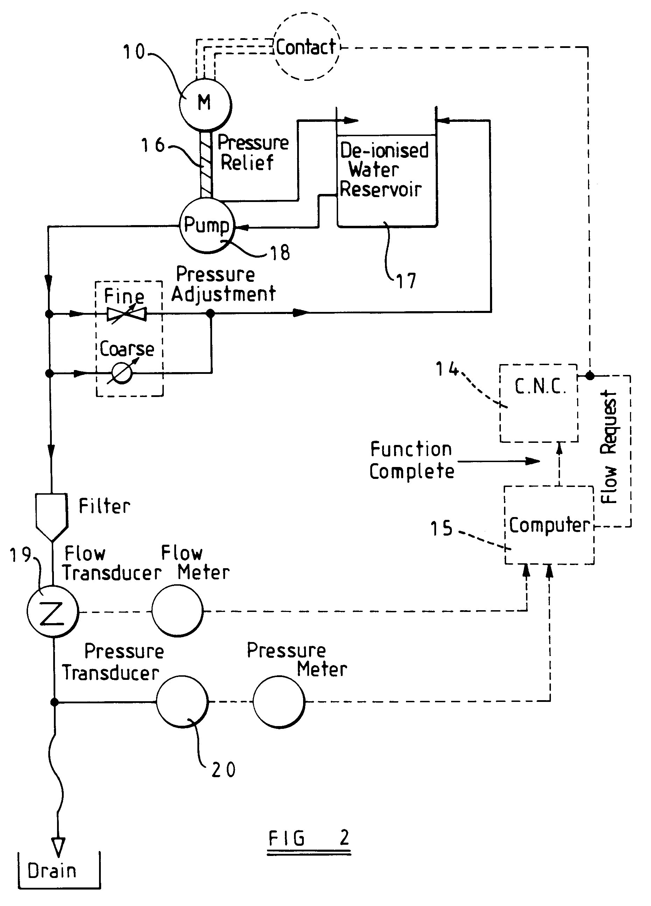

In operation, the EDM machine 10 forms a first aperture and this is then calibrated using the calibration means diagrammatically illustrated in Figure 2.

The EDM machine 10 has a fluid supply 16 which is supplied with deionised water from a reservoir 17. The water is pumped using a pump 18. A flow transducer 19 and pressure transducer 20 control the flow and pressure respectively of the deionised water which is supplied through the aperture which has been machined. Output signals from the transducers 19 and 20 pass to the computer interface 15 and are used by the CNC 14 to adjust the machining parameters of the EDM machine 10.

Calibration takes place between machining operations of the EDM machine 10, that is between the formation of successive apertures.

Deionised water is used as the measuring fluid for reasons of health and safety and also because of its reduced conductivity compared to ordinary water. This latter feature is especially important when an EDM device is used to form the apertures. However, the performance of fuel injectors is normally measured using calibration oil at a pressure of about 2000 psi and the actual flow is measured in pounds per hour (pph) at this pressure. This will differ from the result achieved with deionised water due to the differences in viscosities and mechanical properties of the two liquids and so it is necessary to correlate one with the other. The figures for achieving this can be determined by observation under standard conditions. The necessary correlation and calculation can be performed by the computer such that the results can be used automatically to adjust the EDM apparatus.

A typical method according to the present invention comprises the following steps.

1. An injector blank is fitted to the workpiece holder and a first aperture is drilled by the EDM apparatus. The parameters of the EDM apparatus are set to give a hole of approximately average size e.g. flow rate of 32.7 pph (compensated).

2

    (a) When the hole has been drilled, deionised water is pumped through the holder and out of the hole. The pressure is monitored and as soon as it is stable conveniently at marginally below 200 psi, a series of 25 flow and pressure readings are taken and averaged by computer.

    (b) The equivalent flow of calibrating oil at 2000 psi is calculated from these figures and the result is compared to the original estimate of 32.7 pph. A higher average flow indicates that the hole is too large, a lower average flow that the hole is too small.

    (c) The computer sets the parameters for the EDM generator for the next hole to provide the desired average taking into account the variation of the first hole from the average. To prevent over correction, a figure of plus or minus 1.5 pph is allowed for each average before any correction is made.

3. While step 2 is in process, the workpiece holder is rotated to present a new location to be drilled and the EDM apparatus performs a refeed cycle.

4. The next hole is drilled and steps 2 and 3 repeated with the predicted averages being altered to account for the extra hole.

Steps 2 to 4 are repeated until eight holes have been drilled in the injector.

In the table below, the figures for a complete run are given by way of example, showing the differences between the predicted equivalent oil flow to obtain an optimum performance and the observed water flow from which oil flow is calculated. A variation of more than 1.5 pph causes the EDM parameters to be changed to compensate for the error.

3

EP 0 356 063 B1

| Hole | Actual flow pph | required mean flow pph (compensated) | Variation | EDM parameter | Next EDM |
|------|------|------|------|------|------|
| 1 | 30.8813 | 32.7 | -1.818661 | Medium | High |
| 2 | 64.0637 | 64.60 | -.5362854 | High | Medium |
| 3 | 97.0038 | 95.74 | 1.26384 | Medium | Medium |
| 4 | 127.6853 | 126.08 | 1.605255 | Medium | Low |
| 5 | 155.4824 | 155.73 | -.2475739 | Low | Medium |
| 6 | 184.1429 | 184.57 | -.427063 | Medium | Medium |
| 7 | 212.8543 | 212.66 | .1943207 | Medium | Medium |
| 8 | 240.5903 | 240.00 | .5903015 | Medium | Medium |

When the completed injector was tested with calibrating oil at 2000 psi the actual flow was found to be 239.7 pph which is within the desired performance parameters for an injector.

**Claims**

1. A method of producing an apertured workpiece comprising forming an aperture in a workpiece, supplying (17, 18) a calibrating fluid through the aperture, measuring the flow and pressure of the calibrating fluid through the aperture and comparing the results with a predetermined ideal, adjusting the aperture forming device (10) in accordance with such comparison so as to compensate for the difference between the measured values and the predetermined ideal, characterised in that the workpiece is a multi apertured workpiece and the method includes making said pressure and flow measurements (19, 20) after forming a first aperture and before forming a further aperture using the adjusted aperture forming device (10), and in that the preceding steps are repeated until the appropriate number of apertures has been formed.

2. A method according to claim 1 characterised in that the pressure and flow measurements are made as the position of the blank is adjusted in between aperture forming steps.

3. A method according to claim 1 characterised in that the apertures are formed by an EDM machine, the pressure and flow measurements being used to adjust the EDM generator parameters between aperture forming steps.

4. A method according to claim 3 characterised in that the pressure and flow measurements are fed to a computer connected directly to an EDM control device.

5. A method according to claim 3 characterised in that the measuring fluid is deionised water.

6. Apparatus for producing an apertured workpiece comprising:
   aperture forming means (10);
   supply means (17, 18) for supplying a calibrated fluid through the aperture formed by the aperture forming means;
   flow and pressure measuring means (19, 20) for the calibrating fluid passing through the aperture;
   comparator means (15) for comparing the flow and pressure measurements with a pre-determined

4

ideal;

and control means (14) for the aperture forming means responsive to the output of said comparator to compensate for the difference between the measured values and the pre-determined ideal;

characterised in that a workpiece holder is provided at an aperture forming station and the workpiece is retained therein throughout the forming of a first aperture;

in that the supply means supply the calibrating fluid through the aperture at said aperture forming station;

in that the flow and pressure measuring means (19, 20) for the calibrating fluid are disposed at the aperture forming station;

and in that the workpiece holder is retained at the aperture forming station for the formation of a further aperture.

7.   Apparatus according to claim 6 characterised in that the forming device is an EDM apparatus.

8.   Apparatus according to claim 7 characterised in that computer control means are provided for the EDM apparatus and include said comparator means and said adjustment means.


**Patentansprüche**


1.   Verfahren zur Herstellung eines mit Öffnungen versehenen Werkstücks, wobei das Verfahren folgende Schritte umfaßt: Formen einer Öffnung in einem Werkstück, Zuführen (17, 18) eines Eichfluids durch die Öffnung, Messen von Strömung und Druck des Eichfluids durch die Öffnung und Vergleichen der Resultate mit einem vorgegebenen Ideal, Einstellen der Vorrichtung (10) zum Formen von Öffnungen gemäß einem derartigen Vergleich, um die Differenz zwischen den Meßwerten und dem vorgegebenen Ideal auszugleichen, dadurch gekennzeichnet, daß es sich bei dem Werkstück um ein mit mehreren Öffnungen versehenes Werkstück handelt, und daß das Verfahren das Ausführen der Druck- und Strömungsmessungen (19, 20) nach dem Formen einer ersten Öffnung und vor dem Formen einer weiteren Öffnung unter Verwendung der nachgestellten Einrichtung (10) zum Formen von Öffnungen umfaßt, und daß die vorhergehenden Schritte solange wiederholt werden, bis die geeignete Anzahl von Öffnungen geformt worden ist.

2.   Verfahren nach Anspruch 1, dadurch gekennzeichnet, daß die Druck- und Strömungsmessungen während dem Einstellen der Position des Zuschnittes zwischen Schritten der Formung von Öffnungen vorgenommen werden.

3.   Verfahren nach Anspruch 1, dadurch gekennzeichnet, daß die Öffnungen von einer Funkenerosionsmaschine geformt werden, wobei die Druck- und Strömungsmessungen zum Einstellen der Parameter des Generators der Funkenerosionsmaschine zwischen öffnungsformenden Schritten verwendet werden.

4.   Verfahren nach Anspruch 3, dadurch gekennzeichnet, daß die Druck- und Strömungsmessungen einem direkt mit einer Steuereinrichtung der Funkenerosionsmaschine gekoppelten Rechner zugeführt werden.

5.   Verfahren nach Anspruch 3, dadurch gekennzeichnet, daß es sich bei dem Meßfluid um entionisiertes Wasser handelt.

6.   Vorrichtung zur Herstellung eines mit Öffnungen versehenen Werkstücks, welche folgendes umfaßt:
Mittel (10) zum Formen von Öffnungen;
Zuführungsmittel (17, 18) zum Zuführen eines Eichfluids durch die von dem Mittel zum Formen von Öffnungen gebildeten Öffnung;
Mittel (19, 20) zum Messen von Strömung und Druck des durch die Öffnung gelangenden Eichfluids;
Vergleichsmittel (15) zum Vergleichen der Strömungs- und Druckmessungen mit einem vorgegebenen Ideal;
und Steuermittel (14) für die Mittel zum Formen von Öffnungen, die auf die Ausgabe des Vergleichers ansprechen, indem sie die Differenz zwischen den Meßwerten und dem vorgegebenen Ideal ausgleichen;
dadurch gekennzeichnet, daß an einer Station zum Formen von Öffnungen ein Werkstückhalter vorgesehen ist und das Werkstück in diesem während dem Formen einer ersten Öffnung gehalten wird;
daß die Zuführungsmittel bei der Station zum Formen von Öffnungen das Eichfluid durch die Öffnung zuführen;

daß die Meßmittel (19, 20) für Strömung und Druck des Eichfluids an der Station zum Formen von Öffnungen angeordnet sind;

und daß der Werkstückhalter zum Formen einer weiteren Öffnung an der Station zum Formen von Öffnungen gehalten wird.

7. Vorrichtung nach Anspruch 6, dadurch gekennzeichnet, daß die Formeinrichtung eine Funkenerosionsvorrichtung ist.

8. Vorrichtung nach Anspruch 7, dadurch gekennzeichnet, daß Rechnersteuermittel für die Funkenerosionsvorrichtung vorgesehen sind, und daß sie die Vergleichsmittel und die Einstellmittel umfassen.

**Revendications**

1. Procédé de production d'une pièce à usiner à ouvertures comprenant la formation d'une ouverture dans une pièce à usiner, la fourniture (17, 18) d'un fluide étalon par l'ouverture, la mesure de l'écoulement et de la pression du fluide étalon à travers l'ouverture et la comparaison des résultats à un idéal prédéterminé, l'ajustement du dispositif (10) de formation d'ouvertures selon une telle comparaison de manière à compenser la différence entre les valeurs mesurées et l'idéal prédéterminé, caractérisé en ce que la pièce à usiner est une pièce à usiner à ouvertures multiples et le procédé comprend la prise desdites mesures (19, 20) de pression et d'écoulement après avoir formé une première ouverture et avant de former une autre ouverture en utilisant le dispositif (10) de formation d'ouvertures ajusté, et en ce que l'on répète les étapes précédentes jusqu'à ce que le nombre approprié d'ouvertures ait été formé.

2. Procédé selon la revendication 1, caractérisé en ce que les mesures de pression et d'écoulement sont prises lorsque la position du flan est ajustée entre les étapes de formation d'ouvertures.

3. Procédé selon la revendication 1, caractérisé en ce que les ouvertures sont formées par une machine pour l'usinage électro-érosif, les mesures de pression et d'écoulement étant utilisées pour ajuster les paramètres du générateur de la machine pour l'usinage électro-érosif.

4. Procédé selon la revendication 3, caractérisé en ce que les mesures de pression et d'écoulement sont passées à un ordinateur relié directement au dispositif de commande de la machine pour l'usinage électro-érosif.

5. Procédé selon la revendication 3, caractérisé en ce que la fluide de mesure est de l'eau déminéralisée.

6. Appareil pour la production d'une pièce à usiner à ouvertures comprenant :

un moyen (10) de formation d'ouvertures ;

des moyens (17, 18) de fourniture d'un fluide étalonné à travers l'ouverture formée par le moyen de formation d'ouvertures ;

des moyens de mesure d'écoulement et de pression (19, 20) pour le fluide étalon passant par l'ouverture ;

un moyen comparateur (15 pour la comparaison des mesures d'écoulement et de pression à un idéal prédéterminé ;

et un moyen de commande (14) du moyen de formation d'ouvertures sensible à la sortie dudit comparateur pour compenser la différence entre les valeurs mesurées et l'idéal prédéterminé ;

caractérisé en ce qu'un dispositif de maintien de la pièce à usiner est prévu à un poste de formation d'ouvertures et que la pièce à usiner y est maintenue pendant toute la formation d'une première ouverture ;

en ce que les moyens de fourniture fournissent le fluide étalon par l'ouverture audit poste de formation d'ouvertures ;

en ce que les moyens (19, 20) de mesure d'écoulement et de pression du fluide étalon sont disposés au poste de formation d'ouvertures ;

et en ce que le dispositif de maintien de la pièce à usiner est maintenu au poste de formation d'une autre ouverture.

7. Appareil selon la revendication 6, caractérisé en ce que le dispositif de formation est un appareil pour l'usinage électro-érosif.

8. Appareil selon la revendication 7, caractérisé en ce que des moyens de commande d'ordinateur sont prévus pour l'appareil pour l'usinage électro-érosif et comprennent lesdits moyens comparateurs et lesdits moyens d'ajustement.

FIG 1

FIG 2